# FASCICULE DE BREVET EUROPEEN

(11) **EP 1 986 002 B1**
(45) Date de publication et mention de la délivrance du brevet: **11.11.2015**
(21) Numéro de dépôt: 08154820.8
(22) Date de dépôt: 18.04.2008
(51) Int. Cl.: G01N 27/90, F01D 25/28

(54) **Dispositif de contrôle par courants de Foucault d'une cavité rectiligne.**
Kontrollvorrichtung mit Hilfe von Wirbelströmen in einem geradlinigen Hohlraum
Device for inspecting a rectilinear cavity using Foucault currents.

(30) Priorité: 27.04.2007 FR 0754758
(43) Date de publication de la demande: 29.10.2008
(73) Titulaire: SNECMA, 75015 Paris (FR)
(72) Inventeur: Briffa, Patrick, 77370 Fontenailles (FR); Cabanis, Patrick, 77390, OZOUER LE VOULGIS (FR); Gaison, Patrick, 77130 Cannes ECLUSE (FR); Ravize, Luc, 64510 Bordes (FR)
(74) Mandataire: Intès, Didier Gérard André

(56) Documents cités:
- EP-A- 1 452 863
- EP-A- 1 659 399
- US-A- 5 207 005
- US-A1- 2004 124 834
- US-A1- 2006 097 719

## Description

L'invention se rapporte à un dispositif de contrôle non destructif, par courants de Foucault, d'une cavité rectiligne ouverte, c'est-à-dire présentant une section quelconque sensiblement constante perpendiculairement à une direction longitudinale de celle-ci, le contrôle s'effectuant par brochages successifs suivant la direction longitudinale de cette cavité. L'invention s'applique notamment au contrôle des alvéoles tangentielles d'un disque de turboréacteur, chaque alvéole retenant un pied d'aube.

Le contrôle des alvéoles tangentielles d'un disque de turboréacteur, effectué sur disque à l'état neuf ou dans le cadre d'une opération de maintenance, est un processus long, difficile et coûteux. On utilise classiquement le contrôle par courants de Foucault. La forme complexe des alvéoles nécessite de développer une sonde spécifique à chaque type d'alvéole. Actuellement, les difficultés rencontrées pour la mise au point d'un système performant et automatisable sont les suivantes :
- l'application de la sonde sur une zone à scruter doit se faire sans choc susceptible de détériorer le capteur.
- le balayage d'une zone à scruter, par brochage, doit être fait à vitesse constante sur toute la longueur à contrôler, au cours d'une course dite de brochage.
- les effets de bord doivent être réduits.
- le système doit être capable de détecter tous les défauts, de façon fiable, quelle que soit leur orientation par rapport à la direction de brochage.

EP 1659 399 décrit un système de contrôle par courants de Foucault conçu pour le contrôle de surfaces de formes diverses, grâce à un robot piloté électroniquement. La sonde est rattachée au côté d'une tige. La forme de la sonde permet d'explorer en partie les cavités rectilignes abritant les pieds d'aube pour des incidences faibles où la sonde n'interfère pas avec la paroi d'une telle cavité.

L'invention propose un nouveau dispositif de contrôle non destructif par courants de Foucault permettant d'atteindre les objectifs ci-dessus avec une sonde spécialisée pour ces alvéoles mais non spécifique d'une forme particulière d'alvéole.

Plus particulièrement, l'invention concerne un dispositif de contrôle non destructif par courants de Foucault d'une cavité rectiligne, ouverte, caractérisé en ce qu'il comporte :
- un corps de sonde (20) incluant un capteur (24) à courants de Foucault et une tige (22), ledit capteur étant installé latéralement au voisinage d'une extrémité libre de ladite tige et dans le prolongement d'une rampe (30) s'étendant à partir de cette extrémité et
- des moyens de sollicitation élastique (26) s'exerçant sur ledit corps de sonde, perpendiculairement à ladite tige, pour appliquer ledit corps de sonde contre la surface à contrôler, ladite tige étant déplacée pour décrire des courses rectilignes selon son axe, par brochages successifs, et en ce que ledit capteur (24) est installé sensiblement au sommet d'un bossage latéral (34) à surface courbe, et régulière assurant un contact quasi ponctuel du bossage contre la surface de ladite cavité, ladite rampe (30) étant constituée par la partie du bossage située entre ladite extrémité libre de la tige et ledit capteur.

Avec cet agencement, le capteur est toujours situé au plus près de la génératrice de la cavité qui est scrutée pendant la course de brochage. Le signal recueilli est représentatif de l'état de surface d'une bande étroite au voisinage de cette génératrice. En déplaçant le corps de sonde après chaque brochage, on explore une zone parallèle voisine. Ainsi, de proche en proche, la totalité de la surface interne de la cavité peut être contrôlée, par brochages successifs.

La forme même du corps de sonde, avec une rampe au voisinage du capteur permet une prise de contact sans choc avec la surface à contrôler lors d'une course de brochage. En outre, lorsque le capteur arrive en bordure de l'orifice de la cavité, la vitesse a déjà eu le temps de se stabiliser pendant que ladite rampe était en contact avec le bord de la cavité.

Cette forme courbe convexe et régulière évite les vibrations (car le contact est quasi ponctuel) qui constituent une perturbation à laquelle les courants de Foucault sont particulièrement sensibles. La fiabilité de la mesure en est donc améliorée.

Le bossage latéral est de préférence en résine et le capteur (constitué d'une ou de deux bobines alimentées par un courants haute fréquence) est noyé dans cette résine.

De préférence, le capteur est du type différentiel. Il peut ainsi comporter deux bobines adjacentes, par exemple des bobines se faisant faces symétriquement par rapport à un plan.

Chaque bobine peut être à section semi-elliptique.

Pour assurer la détection de tous les défauts, quelque soit leur orientation, il est avantageux que ledit plan fasse un angle avec la course rectiligne de déplacement de la tige, c'est-à-dire la direction de brochage. Par exemple, cet angle pourra être sensiblement égal à 45° par rapport à la direction de brochage.

Selon une autre particularité avantageuse, les moyens de sollicitation élastique précités comportent un équipage mobile portant le corps de sonde. L'équipage mobile est monté coulissant le long d'un guide, perpendiculairement à ladite tige et des ressorts sont installés entre un point dudit guide et ledit équipage mobile.

Avantageusement, l'équipage mobile comporte des glissières à billes, mobiles le long dudit guide.

Selon encore une autre caractéristique avantageuse, le dispositif comporte un robot programmé pour déplacer ledit corps de sonde selon un contour d'une ouverture de ladite cavité. Ce robot permet de faire varier la position et l'orientation du brochage afin d'explorer, de proche en proche toute la surface à contrôler, par brochages successifs. Le robot peut aussi être programmé pour opérer les courses de brochages proprement dites, c'est-à-dire pour déplacer le corps de sonde selon des courses rectilignes parallèles.

L'invention sera mieux comprise et d'autres avantages de celle-ci apparaîtront plus clairement à la lumière de la description qui va suivre d'un dispositif de contrôle par courants de Foucault conforme à son principe, donnée uniquement à titre d'exemple et faite en référence aux dessins annexés dans lesquels :
- la figure 1 est une vue schématique en perspective de l'installation dans son ensemble ;
- les figures 2 et 3 sont des vues schématiques illustrant le corps de sonde ;
- la figure 4 est une vue de détail du capteur ; et
- la figure 5 est une vue schématique illustrant les moyens de sollicitation élastiques portant le corps de sonde.

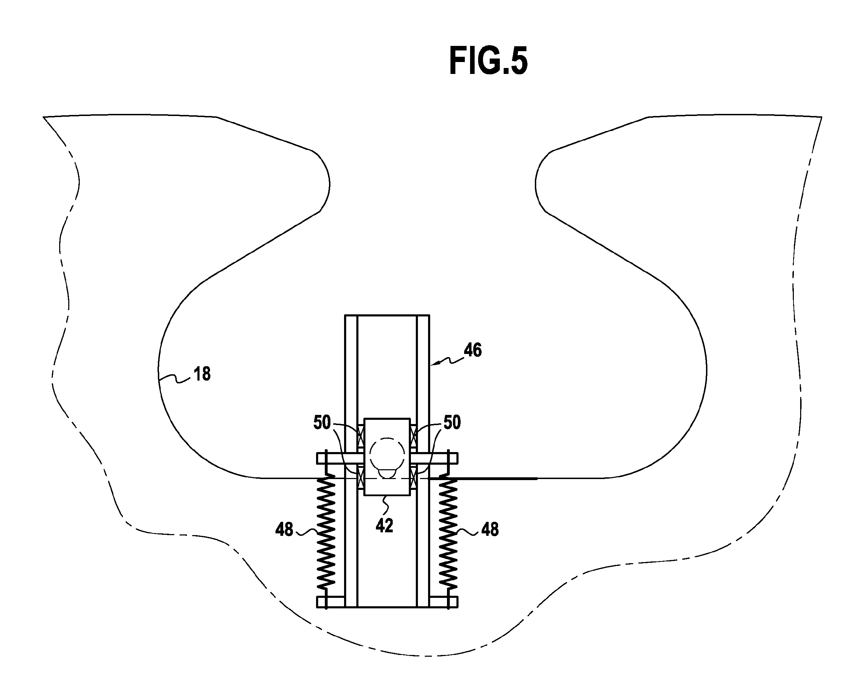

En se référant aux dessins, on a représenté un dispositif de contrôle non destructif 11 par courants de Foucault, ici plus particulièrement pour le contrôle des alvéoles tangentielles d'un disque 14. Chaque alvéole tangentielle est une cavité 15 rectiligne, ouverte à chaque extrémité. La section de la cavité perpendiculairement à sa direction longitudinale est sensiblement constante. Le profil de l'ouverture 18 de la cavité est par conséquent relativement complexe et consiste en une succession de courbes concaves et convexes présentant des rayons de courbure différents, comme visible sur la figure 5.

Il est envisagé de contrôler la surface interne de chaque cavité par brochages successifs, c'est-à-dire par exploration rectiligne selon la direction longitudinale en établissant le contact entre une sonde et la surface interne de la cavité, le long d'une génératrice de celle-ci.

Pour ce faire, le dispositif de contrôle comporte un corps de sonde 20 comportant une tige 22 et un capteur 24 à courants de Foucault et des moyens de sollicitation élastique 26, s'exerçant sur ledit corps de sonde 20.

La tige 22 est rigide et le capteur 24 est installé latéralement au voisinage d'une extrémité libre 28 de cette tige. Il se situe dans le prolongement d'une rampe 30 s'étendant à partir de cette extrémité.

Les moyens de sollicitation élastique 26 s'exercent sur le corps de sonde 20 perpendiculairement à la tige, pour appliquer le corps de sonde 20, latéralement contre la surface à contrôler.

La tige 22 est déplacée selon des courses de brochages, pour décrire des déplacements rectilignes successifs, selon son propre axe.

Avantageusement, le capteur 24 est installé sensiblement au sommet d'un bossage latéral 34 à surface convexe. La rampe 30 est constituée par la partie du bossage située entre l'extrémité libre 28 de la tige et le capteur 24. Au-delà du sommet du bossage, la surface convexe se poursuit jusqu'à venir affleurer la surface cylindrique de la tige. Le bossage latéral 34 est de préférence en résine. Le capteur 24 est noyé dans cette résine et vient affleurer à une très faible distance du point de plus grande épaisseur (sommet latéral) dudit bossage 34.

Le capteur 24 est du type différentiel. Il peut ainsi être électriquement inséré dans un pont de Wheatstone pour une mesure de variation d'impédance.

Selon l'exemple, le capteur 24 est constitué de deux bobines 24a, 24b agencées symétriquement par rapport à un plan. Chaque bobine a ainsi une section semicirculaire ou semi-elliptique, les parties rectilignes de la bobine se faisant faces à peu de distance, de part et d'autre d'un séparateur 39 s'étendant dans ce plan.

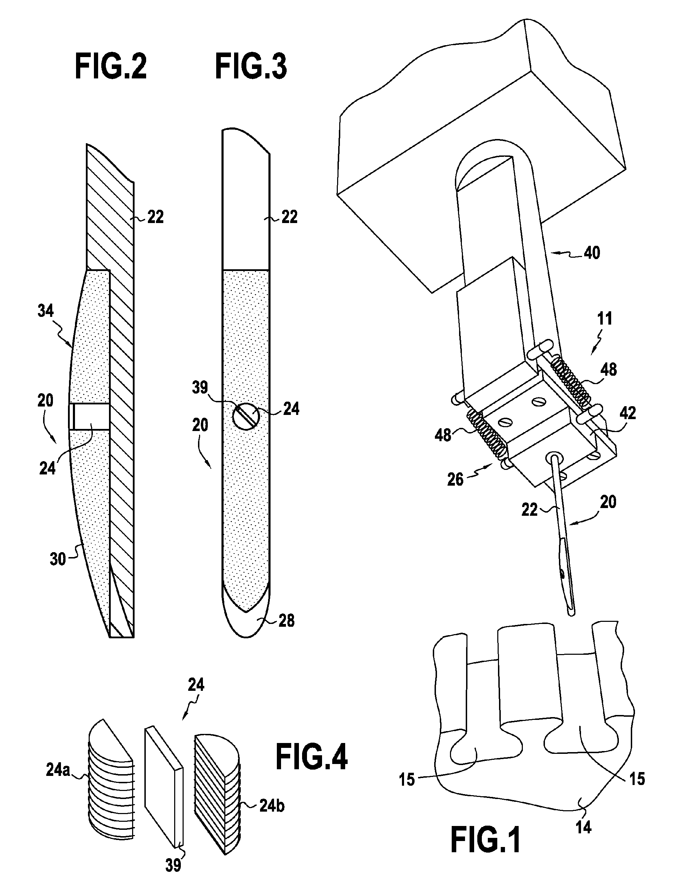

Pour permettre une détection de tous les défauts, y compris ceux qui se trouvent orientés parallèlement à l'axe de brochage, le plan séparateur 39 fait avantageusement un angle avec la course rectiligne de déplacement de ladite tige. Dans l'exemple, cet angle est sensiblement égal à 45° (voir figure 3).

Les moyens de sollicitation élastique 26 sont installés entre l'extrémité d'un bras de robot 40 et le corps de sonde 20. Ils comportent un équipage mobile 42 portant ce corps de sonde, c'est-à-dire plus particulièrement la tige 22. Ledit équipage mobile 42 est lui-même monté coulissant le long d'un guide 46 perpendiculaire à cette tige. Des ressorts 48 sont installés entre le guide 46 et l'équipage mobile 42. Ce dernier comporte aussi des glissières à billes 50 mobiles le long dudit guide.

Par conséquent, lorsque le corps de sonde 20 est orienté, par le robot, suivant une direction choisie pour que le bossage 34 entre en contact avec une génératrice de la cavité 15, les moyens de sollicitation élastique 26 entrent en jeu pour assurer un contact quasi ponctuel entre le bossage 34 et la surface interne de la cavité, le long d'une génératrice parallèle à la direction de déplacement de la tige.

Comme indiqué précédemment, le robot, qui déplace à la fois l'équipage mobile 42 et la tige 22 portant le capteur, est programmé pour orienter et déplacer le corps de sonde 20 selon un contour d'une ouverture d'extrémité de la cavité. A chaque positionnement déterminé par le robot, correspond une course de brochage. Le mouvement de brochage est ici imposé par le robot lui-même, adapté pour déplacer le corps de sonde selon des courses rectilignes parallèles à l'axe de la tige 22. En variante, l'équipage mobile peut être équipé d'un vérin assurant ce mouvement de brochage.

Le profil transversal de la cavité est programmé sous forme de trajectoires successives (brochages) grâce à la commande numérique du robot. La pièce à inspecter est positionnée sur un plateau tournant.

Après étalonnage, la tige 22 est positionnée pour entrer en contact avec une zone rectiligne à examiner. Au cours d'une course de brochage, la sonde est mise en contact avec la surface à contrôler, elle est déplacée parallèlement à la direction longitudinale de la tige et scrute la surface, selon une génératrice. Grâce à la forme du bossage 34, l'accostage du capteur dans la cavité peut se faire sans à coup et la géométrie de la rampe 30 permet de s'affranchir des phases d'accélération et de décélération. On obtient aussi une mise en contact progressive de l'élément sensible (le capteur 24) avec la surface, ce qui réduit les effets de bord.

Le signal délivré par le capteur est filtré et affiché sur écran. L'image est représentative du contrôle réalisé.

Le dispositif qui vient d'être décrit est adaptable sur machine numérique cartésienne ou tout autre outillage automatique ou manuel équipé de codeurs appropriés.

## Revendications

1. Dispositif de contrôle non destructif par courants de Foucault d'une cavité rectiligne, ouverte, **caractérisé en ce qu'**il comporte :
- un corps de sonde (20) incluant un capteur (24) à courants de Foucault et une tige (22), ledit capteur étant installé latéralement au voisinage d'une extrémité libre de ladite tige et dans le prolongement d'une rampe (30) s'étendant à partir de cette extrémité et
- des moyens de sollicitation élastique (26) s'exerçant sur ledit corps de sonde, perpendiculairement à ladite tige, pour appliquer ledit corps de sonde contre la surface à contrôler, ladite tige étant déplacée pour décrire des courses rectilignes selon son axe, par brochages successifs, et **en ce que** ledit capteur (24) est installé sensiblement au sommet d'un bossage latéral (34) à surface courbe, et régulière assurant un contact quasi ponctuel du bossage contre la surface de ladite cavité, ladite rampe (30) étant constituée par la partie du bossage située entre ladite extrémité libre de la tige et ledit capteur.

2. Dispositif selon la revendication 1, **caractérisé en ce que** ladite tige est rigide, son mouvement perpendiculairement à la trajectoire de brochage étant assuré par lesdits moyens de sollicitation élastique.

3. Dispositif selon la revendication 1 ou 2, **caractérisé en ce que** ledit bossage latéral (34) est en résine.

4. Dispositif selon l'une des revendications précédentes, **caractérisé en ce que** ledit capteur (24) est du type différentiel à deux bobines adjacentes.

5. Dispositif selon la revendication 4, **caractérisé en ce que** les deux bobines (24a, 24b) sont symétriques par rapport à un plan.

6. Dispositif selon la revendication 5, **caractérisé en ce que** ledit plan fait un angle avec ladite course rectiligne de déplacement de ladite tige (20).

7. Dispositif selon la revendication 6, **caractérisé en ce que** cet angle est sensiblement égal à 45°.

8. Dispositif selon l'une des revendications précédentes, **caractérisé en ce que** lesdits moyens de sollicitation élastique (26) comportent un équipage mobile (42) portant ledit corps de sonde, **en ce que** ledit équipage mobile est monté coulissant le long d'un guide (46) perpendiculaire à ladite tige et **en ce que** des ressorts (48) sont installés entre ledit guide et ledit équipage mobile.

9. Dispositif selon la revendication 8, **caractérisé en ce que** ledit équipage mobile comporte des glissières à billes (50), mobiles le long dudit guide.

10. Dispositif selon l'une des revendications précédentes, **caractérisé en ce qu'**il comporte en outre un robot (40) programmé pour déplacer ledit corps de sonde selon un contour d'une ouverture (18) de ladite cavité.

11. Dispositif selon la revendication 10, **caractérisé en ce que** ledit robot est aussi programmé pour déplacer ledit corps de sonde (20) selon des courses rectilignes précitées.

## Patentansprüche

1. Vorrichtung zur zerstörungsfreien Wirbelstromprüfung einer offenen, geradlinigen Vertiefung, **dadurch gekennzeichnet, dass** sie umfasst:
- einen Sondenkörper (20), der einen Wirbelstromsensor (24) und einen Schaft (22) umfasst, wobei der Sensor seitlich in der Nähe eines freien Endes des Schaftes und in der Verlängerung einer sich von diesem Ende aus erstreckenden Rampe (30) angeordnet ist, und
- Mittel zur elastischen Beaufschlagung (26), die auf den Sondenkörper senkrecht zu dem Schaft wirken, um den Sondenkörper an die zu prüfende Fläche anzulegen, wobei der Schaft bewegt wird, um durch aufeinanderfolgende Räumvorgänge geradlinige Wege entlang seiner Achse zu beschreiben, und dass der Sensor (24) im Wesentlichen am Scheitel eines seitlichen Buckels (34) mit gekrümmter und gleichmäßiger Oberfläche, die einen quasi punktuellen Kontakt des Buckels an der Oberfläche der Vertiefung sicherstellt, angebracht ist, wobei die Rampe (30) durch den zwischen dem freien Ende des Schaftes und dem Sensor befindlichen Teil des Buckels gebildet ist.

2. Vorrichtung nach Anspruch 1, **dadurch gekennzeichnet, dass** der Schaft starr ist, wobei seine Bewegung senkrecht zu der Räumbahn durch die Mittel zur elastischen Beaufschlagung sichergestellt ist.

3. Vorrichtung nach Anspruch 1 oder 2, **dadurch gekennzeichnet, dass** der seitliche Buckel (34) aus Harz besteht.

4. Vorrichtung nach einem der vorhergehenden Ansprüche, **dadurch gekennzeichnet, dass** der Sensor (24) vom Differentialtyp mit zwei benachbarten Spulen ist.

5. Vorrichtung nach Anspruch 4, **dadurch gekennzeichnet, dass** die beiden Spulen (24a, 24b) in Bezug auf eine Ebene symmetrisch sind.

6. Vorrichtung nach Anspruch 5, **dadurch gekennzeichnet, dass** die Ebene mit dem geradlinigen Bewegungsweg des Schaftes (20) einen Winkel bildet.

7. Vorrichtung nach Anspruch 6, **dadurch gekennzeichnet, dass** dieser Winkel im Wesentlichen gleich 45° ist.

8. Vorrichtung nach einem der vorhergehenden Ansprüche, **dadurch gekennzeichnet, dass** die Mittel zur elastischen Beaufschlagung (26) ein bewegliches Organ (42), das den Sondenkörper trägt, umfassen, dass das bewegliche Organ entlang einer Führung (46), die zu dem Schaft senkrecht verläuft, verschieblich angebracht ist, und dass Federn (48) zwischen der Führung und dem beweglichen Organ angebracht sind.

9. Vorrichtung nach Anspruch 8, **dadurch gekennzeichnet, dass** das bewegliche Organ Kugelführungen (50), die entlang der Führung beweglich sind, umfasst.

10. Vorrichtung nach einem der vorhergehenden Ansprüche, **dadurch gekennzeichnet, dass** sie ferner einen Roboter (40) umfasst, der dazu programmiert ist, den Sondenkörper entlang einer Kontur einer Öffnung (18) der Vertiefung zu bewegen.

11. Vorrichtung nach Anspruch 10, **dadurch gekennzeichnet, dass** der Roboter auch dazu programmiert ist, den Sondenkörper (20) entlang von vorgenannten geradlinigen Wegen zu bewegen.

## Claims

1. A device using eddy currents for non-destruction inspection of an open rectilinear cavity, **characterized in that** it comprises:
• a probe body (20) including an eddy-current sensor (24) and a rod (22), said sensor being installed laterally in the vicinity of a free end of said rod and in line with a ramp (30) extending from said free end; and
• resilient bias means (26) acting on said probe body perpendicularly to said rod to press said probe body against the surface to be inspected, said rod being moved to describe rectilinear strokes along its axis by successive broaching movements, and **in that** said sensor (24) is installed substantially at the top of a lateral projection (34) having a curved and regular surface that provides almost point contact for the projection against the surface of said cavity, said ramp (30) being constituted by the portion of the projection that is situated between said free end of the rod and said sensor.

2. A device according to claim 1, **characterized in that** said rod is rigid, its movement perpendicularly to the broaching path being imparted by said resilient bias means.

3. A device according to claim 1 or claim 2, **characterized in that** said lateral projection (34) is made of resin.

4. A device according to any preceding claim, **characterized in that** said sensor (24) is of the differential type having two adjacent coils.

5. A device according to claim 4, **characterized in that** the two coils (24a, 24b) are symmetrical about a plane.

6. A device according to claim 5, **characterized in that** said plane makes an angle with said rectilinear travel stroke of said rod (20).

7. A device according to claim 6, **characterized in that** said angle is substantially equal to 45°.

8. A device according to any preceding claim, **characterized in that** said resilient bias means (26) include movable equipment (42) carrying said probe body, **in that** said movable equipment is mounted to slide along a guide (46) perpendicular to said rod, and **in that** springs (48) are installed between said guide and said movable equipment.

9. A device according to claim 8, **characterized in that** said movable equipment comprises ball runners (50) that are movable along said guide.

10. A device according to any preceding claim, **characterized in that** it further comprises a robot (40) programmed to move said probe body along an outline of an opening (18) of said cavity.

11. A device according to claim 10, **characterized in that** said robot is also programmed to move said probe body (20) along above-mentioned rectilinear strokes.
